# EUROPÄISCHE PATENTANMELDUNG

(11) **EP 1 566 327 A2**
(43) Veröffentlichungstag der Anmeldung: **24.08.2005**
(21) Anmeldenummer: 05003551.8
(22) Anmeldetag: 18.02.2005
(51) Int. Cl.: B62D 29/00, B62D 27/06

(54) **Hohlprofilelement in der Form eines Aluminium-Strangpressteiles**

(30) Priorität: 20.02.2004 DE 102004008290
(71) Anmelder: DaimlerChrysler AG, 70567 Stuttgart (DE)
(72) Erfinder: Bösselmann, Jürgen, 72585 Riederich (DE); Fussnegger, Wolfgang, 72074 Tübingen (DE)

(57) **Zusammenfassung**

Ein Hohlprofilelement in der Form eines Aluminium-Strangpressteiles mit einer Vielzahl benachbarter Hohlkammern, soll einfach und stabil mit anzusetzenden Bauteilen verbindbar sein und hierzu entsprechende Verbindungselemente besitzen.

Zu diesem Zweck zeichnet sich ein solches Hohlprofilelement durch folgende Merkmale aus
- das Hohlprofilelement (1) ist mit Gewindebohrungen,zur Erzielung von Schraubverbindungen zu anzusetzenden Bauteilen versehen,
- die Gewindebohrungen befinden sich jeweils in Gewinde-Einsätzen (2) aus einem gegenüber Aluminium für eine Gewindebohrung festigkeitsmäßig besser geeignetem Material,
- die Gewinde-Einsätze (2) sind in Öffnungen des Hohlprofilelementes (1) eingesetzt und dort mit diesem verschweißt oder verklebt,
- die Öffnungen für die Gewinde-Einsätze (2) sind zwischen stranggepressten Hohlkammerwänden derart vorgesehen, dass die diesen Öffnungen angepassten Einsätze (2) in eingesetztem Zustand an zumindest gegenüberliegenden Hohlkammerwänden flächenschlüssig anliegen.

## Beschreibung

Die Erfindung betrifft ein Hohlprofilelement in der Form eines Aluminium-Strangpressteiles mit einer Vielzahl benachbarten Hohlkammern nach dem Oberbegriff des Anspruchs 1.

Derartige Hohlprofilelemente in insbesondere der Form plattenförmiger Strukturelemente für den Kraftfahrzeugbau sollen stabile Gewindebohrungen für anzuschraubende Bauteile besitzen.

Hierfür sieht die Erfindung eine Ausbildung solcher Hohlprofilelemente nach den kennzeichnenden Merkmalen des Patentanspruchs 1 vor.

Vorteilhafte und zweckmäßige Ausgestaltungen sind Gegenstand der Unteransprüche.

Die Erfindung beruht auf dem allgemeinen Gedanken, die erforderlichen Gewinde in Gewindeeinsätzen vorzusehen und diese Einsätze derart zu gestalten, dass sie innerhalb der Hohlprofilelemente an den vorhandenen Hohlkammerwänden durch flächenschlüssige Anlage sicherer Halt erlangen können. Sofern die Gewindebohrung mit ihrer Achse senkrecht zu der Oberfläche eines plattenförmigen Hohlprofilelemtes liegen soll, ist die Ausnehmung für den Gewinde-Einsatz so zu legen und der Gewinde-Einsatz derart zu gestalten, dass der Gewinde-Einsatz zumindest zwischen zwei Hohlkammerwänden an diesen jeweils anliegend Halt finden kann.

Besonders einfach ist das Einführen eines Gewinde-Einsatzes im erfindungsgemäßen Sinne in das Ende einer an einem Profilelement auslaufenden Hohlkammer. In diesem Fall ist der Querschnitt des Gewinde-Einsatzes lediglich dem Querschnitt der Hohlkammer anzupassen.

Für einen festen Halt des Gewinde-Einsatzes in einem Hohlprofilelement ist eine Klebe- oder Schweißverbindung vorzusehen.

Im Stand der Technik ist es zwar aus beispielsweise DE 40 21 190 C1, DE 37 40 401 A1 und DE 196 06 536 C1 bekannt, Einsätze zur Erzielung von Schraubverbindungen in Hohlprofilelementen vorzusehen, wobei dort allerdings diese Einsätze nicht direkt mit Gewindebohrungen für ein Ansetzen eines Bauteiles durch eine Schraubverbindung bestimmt sind.

Ein Ausführungsbeispiel der Erfindung ist in der Zeichnung dargestellt.

In dieser zeigen:
- Fig. 1: einen Endbereich eines mit einer Vielzahl an Hohlkammern versehenen Hohlprofilelementes mit einem eingesetzten Gewinde-Einsatz als Ausschnitt,
- Fig. 2: einen Ausschnitt aus einem plattenförmigen Hohlprofilelement mit einem von der Plattenoberfläche aus eingebrachtem Gewinde-Einsatz.

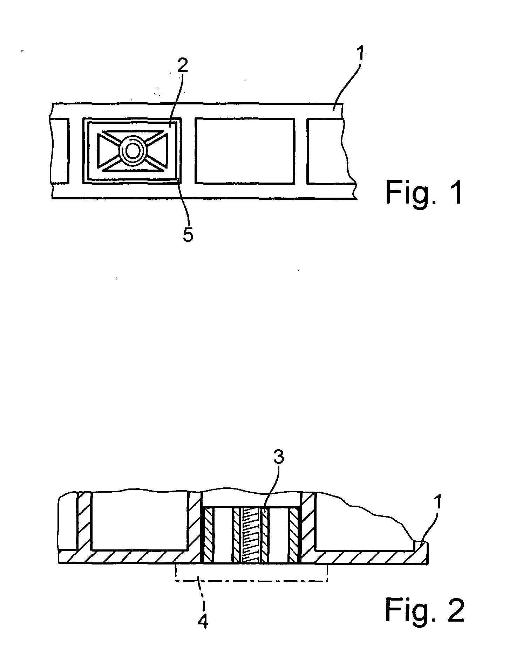

Bei der Draufsicht auf einen Ausschnitt aus dem Endbereich eines plattenförmigen Hohlprofilelementes 1 nach Fig. 1 ist in den gesamten Querschnitt einer Hohlkammer dieses Hohlprofilelementes 1 ein komplementär angepasster Gewinde-Einsatz 2 eingesetzt. Zur sicheren Befestigung des Gewinde-Einsatzes 2 in der Hohlprofilkammer ist eine Verklebung 5 zwischen Einsatz 2 und Kammerwand vorgesehen.

Der Gewinde-Einsatz 2 besitzt über die gesamte Länge, in der er in die Hohlkammer eingreift, den gleichen Querschnitt.

Bei der Ausführung nach Fig. 2 ist in ein ebenfalls plattenförmiges Hohlprofilelement 1 von der Plattenseite aus ein Gewinde-Einsatz 3 in eine senkrecht zu der Plattenebene verlaufenden Öffnung eingebracht. Die Öffnung ist so ausgelegt, dass ein Gewinde-Einsatz in einer Form nach Fig. 1 jeweils flächenschlüssig an zwei gegenüberliegenden Hohlkammerwänden anliegen kann. Der Gewinde-Einsatz 3 nach Fig. 2 besitzt den gleichen Querschnitt wie derjenige nach Fig. 1.

In Fig. 2 ist eine Ausführung eines Gewinde-Einsatzes 3 durch strichpunktierte Linien angedeutet, bei dem dieser Einsatz einen Anschlag-Flansch 4 aufweist. Ein solcher Anschlag-Flansch 4 kann beispielsweise für einen sicheren Halt des Einsatzes in dem Hohlprofilelement 1 gegenüber diesem verschweißt sein.

## Patentansprüche

1. Hohlprofilelement in der Form eines Aluminium-Strangpressteiles mit einer Vielzahl benachbarter Hohlkammern,
**gekennzeichnet durch** die Merkmale
- das Hohlprofilelement (1) ist mit Gewindebohrungen zur Erzielung von Schraubverbindungen zu anzusetzenden Bauteilen versehen,
- die Gewindebohrungen befinden sich jeweils in GewindeEinsätzen (2, 3) aus einem gegenüber Aluminium für eine Gewindebohrung festigkeitsmäßig besser geeignetem Material,
- die Gewinde-Einsätze (2, 3) sind in Öffnungen des Hohlprofilelementes (1) eingesetzt und dort mit diesem verschweißt oder verklebt,
- die Öffnungen für die Gewinde-Einsätze sind zwischen stranggepressten Hohlkammerwänden derart vorgesehen, dass die diesen Öffnungen angepassten Einsätze (2, 3) in eingesetztem Zustand an zumindest gegenüberliegenden Hohlkammerwänden flächenschlüssig anliegen.

2. Hohlprofilelement nach Anspruch 1,
**dadurch gekennzeichnet,**
**dass** die Gewinde-Einsätze (2) jeweils dem Querschnitt einer Hohlkammer angepasst und in deren offenes Ende eingeschoben sind.

3. Hohlprofilelement nach Anspruch 1 oder 2,
**dadurch gekennzeichnet,**
**dass** dieses plattenförmig ausgebildet ist.
